# EUROPEAN PATENT SPECIFICATION

(11) **EP 1 412 138 B1**
(45) Date of publication and mention of the grant of the patent: **02.12.2009**
(21) Application number: 02756045.7
(22) Date of filing: 18.07.2002
(51) Int. Cl.: B25J 19/00, B25J 9/06

(54) **INDUSTRIAL ROBOT**
INDUSTRIEROBOTER
ROBOT INDUSTRIEL

(30) Priority: 02.08.2001 SE 0102649
(43) Date of publication of application: 28.04.2004
(73) Proprietor: ABB AB, 721 83 Västerås (SE)
(72) Inventor: BACK, Daniel, S-632 39 Eskilstuna (SE); FORSLUND, Karl-Erik, S-723 53 Västeras (SE); SALOMONSSON, Dan, S-722 19 Västeras (SE); TELLDEN, Leif, S-723 47 Västeras (SE)
(74) Representative: Johansson Webjörn, Ingmari
(86) International application number: PCT/SE2002/001396
(87) International publication number: WO 2003/015998

(56) References cited:
- EP-A1- 0 593 786
- WO-A1-01/00372
- DATABASE WPI Week 199850, Derwent Publications Ltd., London, GB; Class X25, AN 1998-588505, XP002972937 & JP 10 264 074 A (TOYODA MACHINE WORKS LTD) 06 October 1998
- PATENT ABSTRACTS OF JAPAN vol. 16, no. 26 (M-1202) 22 January 1992 & JP 03 239 495 A (MITSUBISHI ELECTRIC CORP) 15 October 1991

## Description

### TECHNICAL FIELD

The invention relates to an industrial robot, a method for equipping the robot with a cable harness, a cable harness, and use of the robot.

### BACKGROUND ART

In industrial robots, it is common practice to arrange the cable harness internally of the robot to protect the cable harness. When manufacturing industrial robots with an internally drawn cable harness, there is a need to impart great mobility to a robot tool in the form of bending and rotational movements. The movements of the tool during operation entail bending and rotational movements of the cable harness. In an industrial robot, therefore, the cable harness is subjected to movements repeated in cycles, and these movements result in wear on individual strands included therein. For one thing, the individual strand is worn, and, for another, wear arises between the individual strands in the cable harness. If the wear is allowed to continue for a long time, it leads to damage to the cable harness, which in turn leads to unwanted and, in the worst case, sudden shutdowns. In the light of these facts, a cable harness is judged to have a certain service life depending on, inter alia, the extent to which it is bent and turned during the work cycles of the robot. The service life of the cable harness is dependent on the robot application in question. Therefore, the operating routine comprises replacing a worn-out cable harness with a new cable harness in good time, according to scheduled service intervals, before a risk of damage and shutdown arises.

The determination cable harness here means a process cable harness for, for example, electric power for welding electrodes, power supply for robot tools and a robot, electric signal cables for transmission of information from sensors at the tool, hoses for compressed air and cooling medium, or combinations thereof in accordance with the client application at hand. In addition, the determination comprises spare circuits for, for example, the various needs of the client.

In the patent document EP 0 873 826, a wrist for an industrial robot is shown. The wrist is built up of three parts that are rotatably connected to one another and designed so as to form a continuous open channel. Cables and wires for the power supply are drawn through the three parts of the wrist and to the rear part of a tool holder. Inside the wrist part, nearest the tool holder, the cable harness is attached with a clamping device. On its way from the clamping device to the tool holder, the cable harness is adapted to branch out radially in separate lines/strands, which are each individually connected on the periphery of the tool holder. Between the clamping device and the connection on the periphery of the tool holder, each individual line/strand is arranged so as to be bent 90°. The object of the device is to completely enclose and protect the cable harness. The design permits a maximum of 90° bending of the wrist by rotation of the parts included under simultaneous bending and rotation of the cable harness.

The US patent document US 5 549 016 corresponds to the preamble of claim 1 and shows a wrist intended for an industrial robot. A cable harness is drawn through the wrist and connected to the working tool of the robot.

The document EP 0 593 786 teaches an industrial robot having a construction wherein the robot includes a structural arm disposed as a structural element on the side portion of a robot drum of a robot machine and a cable handling arm disposed in a double-arm structure. A cable bundle is stored inside a cable storage element of this cable handling arm, and the cable storage element itself can be removed from the side portion of the robot drum as a unit element. Power feed cables and transmission cables, removably mounted in a unitized structure to the robot machine body, are stored without being exposed to the outside. When breakage of the cables occurs, the disconnected cables can easily be removed from the robot machine body and repaired.

In the operation of industrial robots, there is a need to minimize the time for service of the robot, since a shutdown for service entails non-productive time and thus increased operating costs.

One way of reducing the time for service shutdowns is to extend the service life of the cable harness. An extended service life of the cable harness results in increased operating time between replacements of cable harnesses, whereby the time for service shutdowns in total terms decreases. Especially in the operation of industrial robots in applications with requirements for great mobility of the wrist of the robot, the need to extend the service life of the cable harness, by reducing the wear thereof, arises.

A device or apparatus that corresponds to the relevant client application is arranged on the tilt of the robot writs and, for the sake of simplicity, it is designated robot tool in the following. Examples of robot tools are a spot welding gun, a tool for handling equipment, and a laser cutter.

The movements of the robot tool cause the cable harness connected to the robot tool to be subjected to repeated bending/rotation, the strands included in the cable harness thus being displaced axially in relation to one another. The axial displacements lead to abrasion between the individual strands and between the strands and the outer casing of the cable harness. The abrasion results in unwanted wear of the cable harness. This results in a need to arrange a cable harness and to connect it such that the wear between the individual strands is minimized/eliminated and that the service life of the cable harness is increased.

All in all, the time for a service shutdown decreases when the time of each individual cable harness replacement decreases. This creates a need of arranging a cable harness in a robot such that replacement/supplementation of the cable harness takes place rapidly and simply.

This need cannot be fulfilled by any of the industrial robots shown in the cited documents, taken together.

### SUMMARY OF THE INVENTION

The object of the present invention is to reduce the operating time that is lost as service time when replacing a cable harness. The object is thus to arrange an industrial robot that makes possible rapid replacements or supplementations of the whole of or parts of a cable harness and that the cable harness as such is adapted so as to have a comparatively longer service life. The cable harness is preferably arranged so that, during movement of the robot tool, the cable harness manages a bending of more than 90° while being simultaneously rotated.

According to the invention, the above-mentioned object is achieved with an industrial robot that exhibits the characteristic features described in the characterizing part of claim 1.

According to the invention, an industrial robot is arranged with a cable harness which, by its first end, is drawn through the robot wrist and is detachably connected to the turning disc provided with a robot tool. The second robot unit here consists of a turning disc that supports a robot tool.

The industrial robot according to the invention is arranged in accordance with the dependent claims. It is part of the inventive concept that the first robot unit is adapted for rotation and/or bending and that the first robot unit is arranged in immediate proximity to the second robot unit. It is also part of the inventive concept that the robot units are arranged in spaced relationship to each other via at least one intermediate robot unit in the manipulator.

The solution according to the invention comprises shortening the time for service shutdowns by making possible simple and rapid cable harness replacements. In an advantageous embodiment, the body according to the invention is arranged axially divided into two separate parts that are coaxially series-connected and detachably connected by, for example, a quick coupler. The first part is secured to the first end of the cable harness. The second part is detachably connected to, for example, a turning disc in a robot wrist. It is to be understood here that the quick coupler withstands the high water and air pressures prevailing.

In an additional embodiment of the invention, the cable harness is provided at its first end with a body according to the invention and at its second end arranged with a dividing section, wherein the dividing section implies that the cable harness is divisible into two parts in the longitudinal direction. The cable harness is coupled by means of, for example, a quick coupler at the dividing section. This affords the possibility of simply and rapidly detaching and replacing only part of the cable harness. For example, a cable harness part according to the invention constitutes a comparatively shorter internal cable harness, which is drawn through a robot wrist and adapted to be connected to or detached from a turning disc.

It is part of the inventive concept that a body according to the invention is detachably built into the second robot unit. In a further embodiment, the body according to the invention is radially divided into at least two sub-bodies. The division into sub-bodies facilitates leading the cable harness through the narrower passages in a manipulator, which will be explained in greater detail below. The sub-bodies are then mounted into, for example, a turning disc and are then arranged detachably built in. The sub-bodies hence offer a simple connection of the power supply to a robot tool.

In a further advantageous embodiment, the body according to the invention is arranged divided into sub-bodies with compatible shapes. By compatible shapes are meant that the sub-bodies may fit into one another like pieces in a jigsaw puzzle. In this way, the sub-bodies together form a compact and detachable body. The compatible shape of the sub-bodies is shaped such that the sub-bodies hook into one another when they are fitted into one another. Alternatively, the sub-bodies are retained by a holder device when the cable harness is drawn through the manipulator, the holder device being removed when the cable harness is in position in the manipulator.

The solution according to the invention comprises extending the service life of a cable harness by reducing the internal wear in the cable harness and then, in particular, by eliminating the axial changes in length that occur in the wrist portion of a cable harness when bending/rotating a robot tool.

In one advantageous embodiment of the invention, a cable harness is arranged during manufacture to be rotated around the longitudinal axis of the cable harness in accordance with the dependent claim 10. Installed in an industrial robot, the cable harness constitutes a detachable part length of the cable harness in accordance with the dependent claim 9 and is, for example, the above-mentioned section through the wrist. The central portion of a cable harness consists of a tube/hose.

By manufacturing the cable harness along a longitudinal section rotated one or several turns around the longitudinal axis of the cable harness and then mounting it so as to rotate with the second robot unit and, in use, subjecting it to bending, an axial displacement and formation of slack occur in each individual strand over each twist turn. The axial displacement and the formation of slack cancel each other out over each twist turn and hence no axial displacement of the strands takes place upon bending. The above-mentioned internal wear on the cable harness is thus eliminated. It is further part of the inventive concept to arrange the cable harness with dividing sections such that it may be divided into a number of part lengths.

The inventive concept comprises all industrial robots that comprise a first and a second hollow robot units, rotatable around their respective longitudinal axes, adapted for bending and/or rotation relative to each other. This description is not to be seen as a limitation of the invention but only as guidance for a full understanding of the invention. Adaptations to robot cells with other active parts included and replacement of parts and features that are self-explanatory to a person skilled in the art are, of course, part of the inventive concept.

### BRIEF DESCRIPTION OF THE DRAWING

The invention will be explained in greater detail by description of embodiments with reference to the accompanying drawing, wherein
Figure 1 shows an example of an industrial robot,
Figures 2a-g show schematic advantageous embodiments of the invention with one end of a cable harness arranged with a body according to the invention, a turning disc and a robot tool,
Figure 3 shows an embodiment of the invention with a body according to the invention divided into sub-bodies that are built into a turning disc,
Figure 4 shows an embodiment with the body according to the invention connected to a turning disc and provided with connections for the power supply of a robot tool,
Figure 5 shows an embodiment of the invention, wherein the body according to the invention comprises axial connections for the power supply of the robot tool and is detachably connected to a turning disc,
Figure 6 shows an embodiment of the body according to the invention divided into three compatible sub-bodies,
Figures 7a-c schematically show a robot cable harness according to the invention, arranged so as to be divided into two part lengths (connection terminals not being shown),
Figure 8 shows a cable harness arranged at one end with a body according to the invention built into a turning disc (partly shown) and arranged at its other end with a coupling device and arranged with lines/strands twisted around the centre axis B,
Figure 9 shows a cable harness according to the invention,
Figures 10a-c show various advantageous embodiments of the cable harness according to the invention,
Figure 11 shows various advantageous embodiments with a standard interface and a tool changer,
Figures 12a and 12b show two alternative interfaces ahead of the turning disc as viewed from the robot foot.

### DESCRIPTION OF THE PREFERRED EMBODIMENT

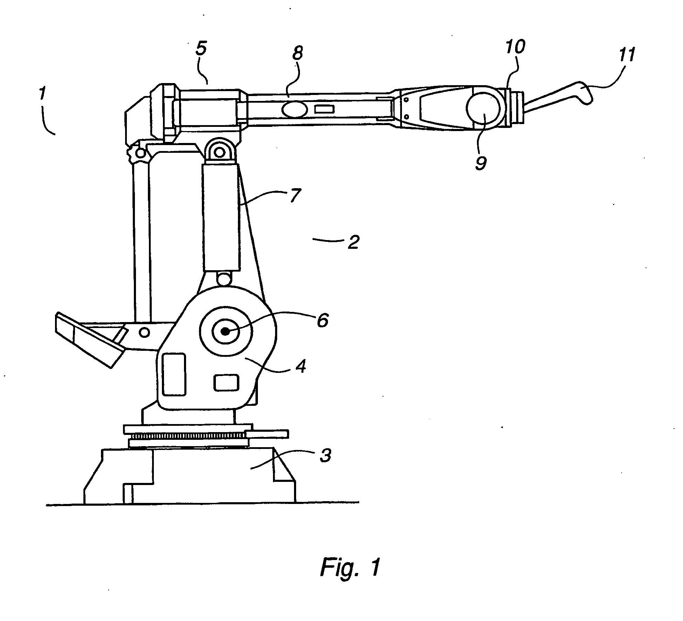

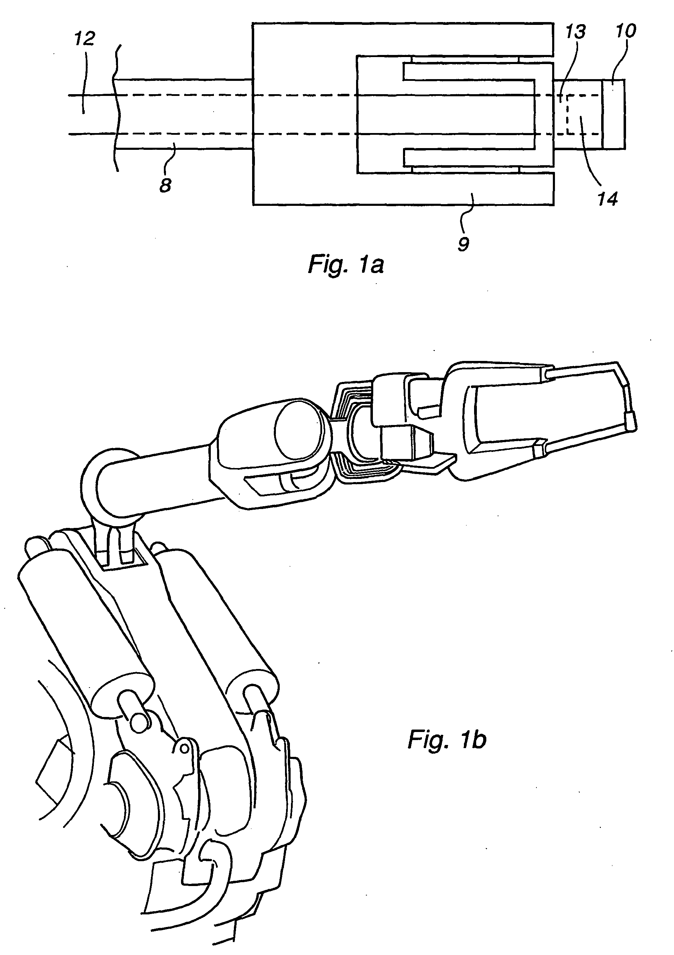

The invention relates to an industrial robot and the invention is exemplified in Figure 1 by a six-axis robot 1 comprising a manipulator 2 with a control system (not shown). The manipulator 2 exhibits a robot foot 3, a stand 4, and a robot arm 5. The stand 4 is rotatably arranged on the robot foot 3. The robot arm 5 is rotatably arranged on the strand at a joint 6. The robot arm 5 comprises at least a first arm part 7 supporting a vertically oriented, rotating upper arm 8 as well as a wrist 9, which are rotatably arranged in relation to each other. At its free end, the upper arm 8 supports the wrist 9, which comprises a turning disc 10 provided with a robot tool 11 where the wrist 9 and the turning disc 10 are rotatably and bendably movable in relation to each other.

A cable harness 12 is drawn by its first end 13 through the upper arm 8, through the wrist 9 and up to the turning disc 10, which is shown in Figure la. At the first end 13 of the cable harness, a body 14 according to the invention is secured. The cable harness 12 is detachably connected to the turning disc 10 via the body 14 according to the invention.

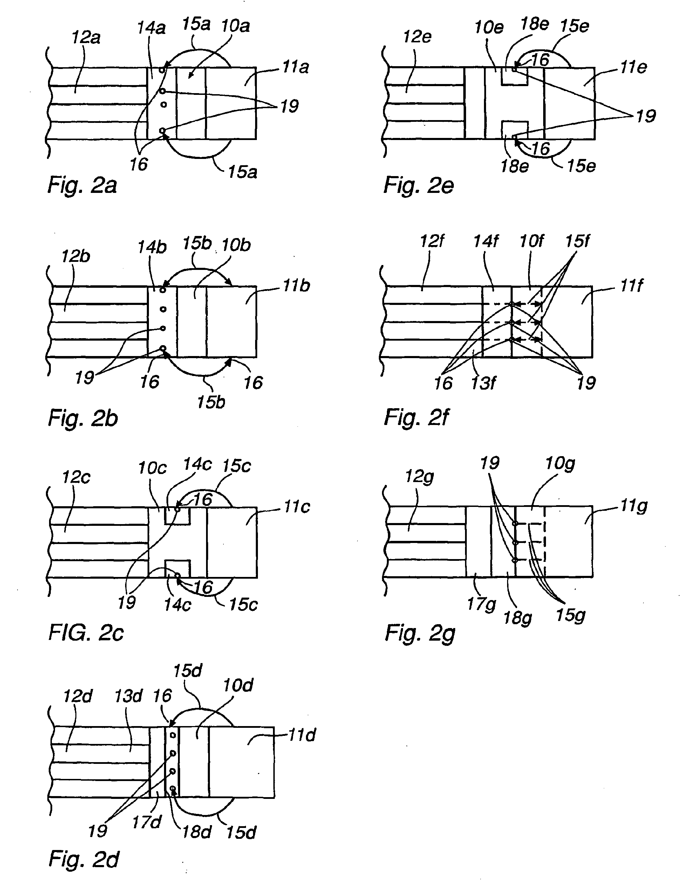

Figures 2a-g show different embodiments of the invention, where a body 14 according to the invention is arranged at a first end 13 of a cable harness 12 and where the cable harness is further detachably connected to a turning disc 10. The body 14, the turning disc 10 and the robot tool 11 are shown fully schematically with simple symbols in order to simply and clearly describe the various alternative embodiments according to the invention.

Figure 2a shows a body 14a connected to a turning disc 10a, which in turn supports a robot tool 11a. The power supply to the robot tool 11b occurs via lines/cables 15a, which extend from the robot tool 11a and are connected to the body 14a. The respective coupling 16 is shown in Figures 2a-g only simplified by means of an arrow.

The device in Figure 2b differs from the embodiment of Figure 2a only in that the power supply 15b to the tool 11b is connected both to the body 14b connected to the turning disc 10b, and to the robot tool 11b.

In Figures 2a and 2b, the lines/cables for the power supply of the robot tool are connected radially or, alternatively, by means of oblique connections to the body according to the invention connected to the turning disc.

In Figure 2c, a body 14c according to the invention is built into a turning disc 10c and here the mounting is designed such that the power supply 15c to a robot tool 11c is connected to the turning disc 10c radially or, alternatively, obliquely. The mounting of the body 14c in the turning disc 10c will be described below.

Figure 2d shows an embodiment in which a body 14d according to the invention has been physically divided, by means of a radial cut, into two coaxial sub-bodies 17d and 18d, which are adapted to be connected in series with the aid of a quick coupler (not shown). The sub-body 17d is secured to the first end 13d of the cable harness 12d. The second sub-body 18d is arranged detachably connected to the first sub-body 17d and to a turning disc 10d. The power supply to the robot tool 11d is occurs via lines/cables 15d, which are connected to the second sub-body 18d. By detaching the first sub-body 17d from the second sub-body 18d, the cable harness 12d is detached from the turning disc 10d.

The embodiment shown in Figure 2e differs from Figure 2d in that a second sub-body 18e, in its turn, is divided into sub-bodies 18e', which are detachably built into a turning disc 10e. Lines/cables 15e for the power supply to a robot tool 11e extend from the tool and are connected to the inventive sub-bodies 18e' built into the turning disc 10e. In an alternative embodiment according to Figure 2e, short internal cable harnesses according to the invention are arranged in the turning disc to be connected to the sub-body 17e and the respective sub-body 18d' (not shown).

The division of the body 14 according to the invention into two sub-bodies 17 and 18 makes it possible to detach a first end 13 of a cable harness 12, which is fixed in the first sub-body 17 and thereafter to pull out the first end of the cable harness in a direction towards the robot foot. This makes it simple and quick to replace a cable harness without having to detach the connection of the second sub-body 18 to, or mounting thereof in, a turning disc 10.

The body 14 according to the invention is provided with a terminal 19 for connection of the power supply 15 to the robot tool 11. In Figures 2a-e, the terminals 19 are shown in simplified form and radially arranged in relation to the longitudinal axis of the cable harness.

In Figure 2f, an embodiment is shown in which a body 14f according to the invention is secured to the first end 13f of the cable harness 12f. The body 14f is detachably arranged on a turning disc 10f that supports a robot tool 11f. The power supply 15f to the robot tool 11f is connected to the body 14f via the terminals 19 and coupling 16 arranged internally in the turning disc 10f and axially in relation to the cable harness.

Figure 2g shows an embodiment that is a combination of the embodiments according to Figures 2d and 2f. The body according to the invention is divided into the sub-bodies 17g and 18g. The sub-body 18g comprises axially arranged terminals 19 for connection of the power supply 15 to a robot tool 11g. The embodiment makes it possible to disconnect the cable harness without having to detach the power supply of the robot tool.

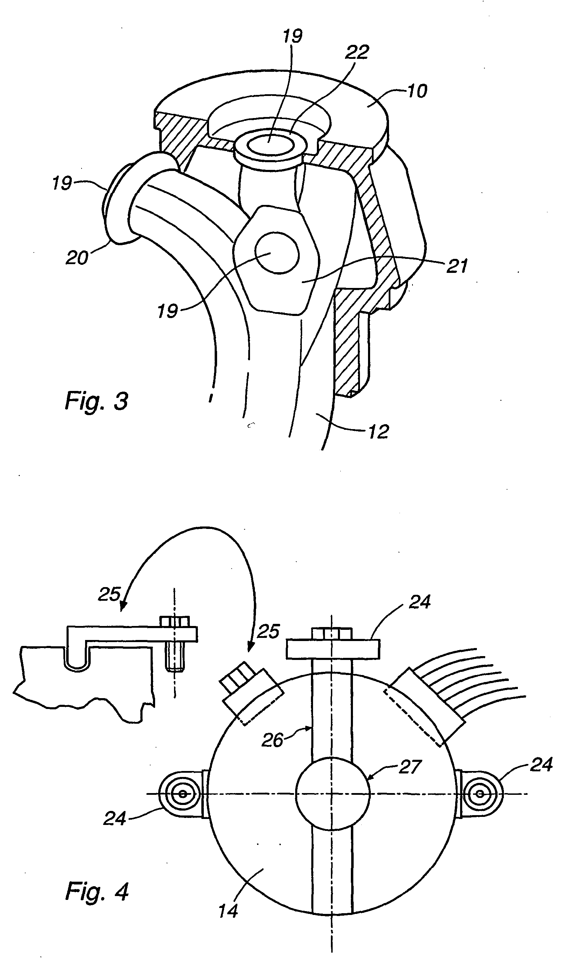

Figure 3 shows an embodiment with a body according to the invention that is secured to a first end of the cable harness 12. The body is divided into four sub-bodies 20, 21, 22 and 23 (not shown), which sub-bodies are detachably built into the turning disc 10. The sub-bodies are retained during the installation to facilitate leading the end of the cable harness through the manipulator. Each sub-body comprises a terminal 19 for connection of the power supply 15 to a robot tool (not shown). In Figure 3, a sub-body 22 of the power supply 15 for the robot tool (not shown) is axially connected to the turning disc 10.

Figure 4 shows an embodiment of the invention where a body 14 comprises radially arranged connections 24 for the power supply of a robot tool. The body 14 is provided with a quick coupler (not shown) to be simply and quickly detached from a turning disc. It is inherent in the design that the body 14 is provided with axial locking 25, rotational locking 26 and centring 27, which is clear from the figures.

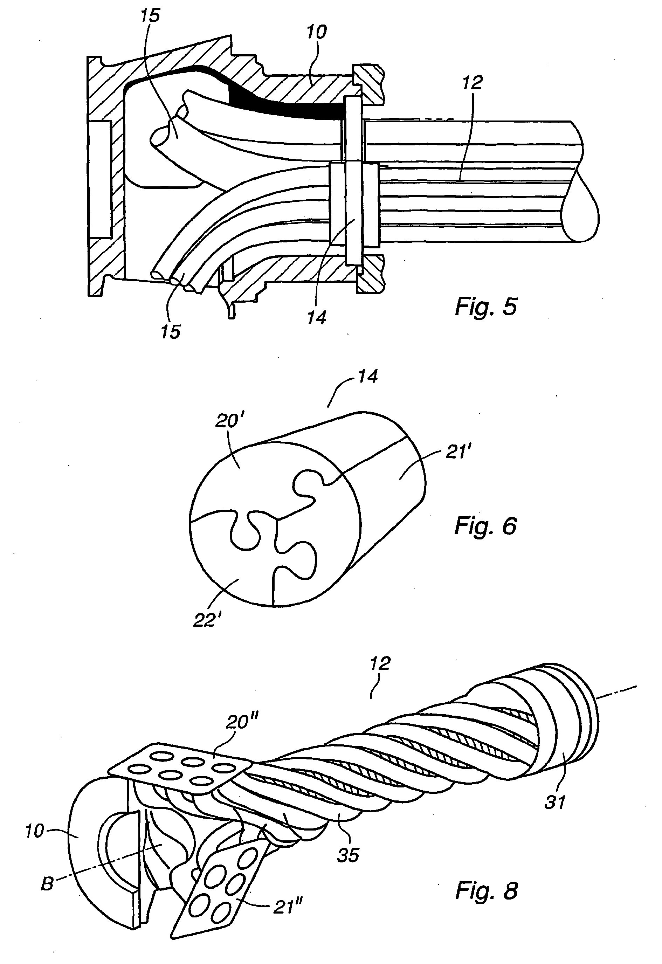

Figure 5 shows an embodiment of the invention where the body 14 according to the invention comprises axial connections for the power supply 15 of the robot tool 10 and is detachably connected to a turning disc 10.

Figure 6 shows a body 14 according to the invention, divided into three sub-bodies 20', 21'and 22' with a compatible design.

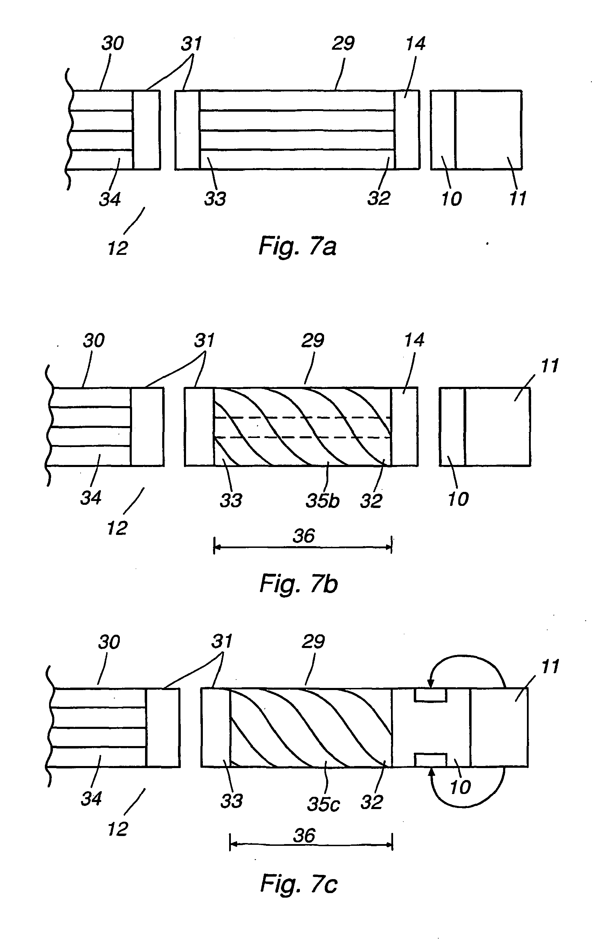

Figure 7a shows a cable harness 12 according to the invention, divided into a first 29 and a second part length 30, which part lengths are detachably interconnected through a coupling device 31. The first end 32 of the first part length 29 is adapted for detachable connection to the second robot unit 10. The second end 33 of the first part length 29 is adapted for detachable connection to the first end 34 of the second part length 30. The figure shows the part length prior to connection to the unit 10 and the device 31, respectively.

Figure 8 shows a cable harness in accordance with the invention with the body according to the invention divided into sub-bodies 20", 21" and 22" (not shown), which are detachably built into a turning disc 10. The cable harness is provided with lines/strands 35, which are radially extended and arranged twisted around a centre line B according to the above. The central portion of the cable harness consists of a tube/hose, one end of which supports a coupling device 31. The attachment of the cable harness is designed so that a coupling device 31 rotates with the turning disc 10.

Figure 7b shows a schematic picture of a cable harness according to Figure 7a with the part length 29 arranged with strands 35B, twisted around the longitudinal axis, along the length section 36 of the part length. A central tube/line is drawn in dashed line in the figure. The power supply is connected axially between the body 14 and the turning disc 10. The figure shows the part length 29 prior to connection to the unit 10 and the device 31, respectively.

Figure 7c schematically shows a cable harness rotated according to the above, where the body according to the invention is divided into sub-bodies, which are detachably built into a turning disc 10. The figure shows the part length 29 with the body 14 detachably built into the turning disc 10 but prior to connection to the device 31.

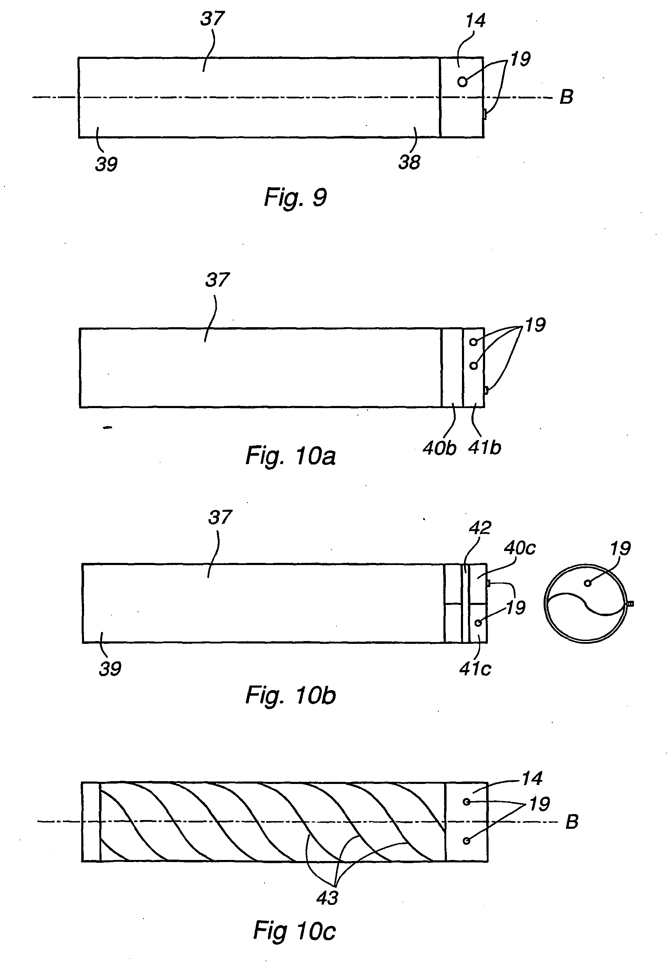

Figure 9 schematically shows a cable harness 37 according to the invention intended for an industrial robot. The cable harness comprises a first end 38 and a second end 39. A body 14 according to the invention, and defined according to the above, is secured to the first end 38 of the cable harness. The body 14 comprises at least one terminal 19 for connection of the power supply and the necessary media (fluids) to a robot tool. The terminal 19 is arranged on the body and directed axially, radially or at a non-right angle in relation to the longitudinal axis of the cable harness.

Figures 10a-c schematically show different embodiments of the cable harness according to the invention, which is shown in Figure 9. In Figure 10a, the body 14 according to the invention is divided into two sub-bodies 40b and 41b, which are coaxially arranged and detachably interconnected in series. The embodiment permits disconnection of the cable harness 37 without having to disconnect the sub-body 41b with the connection terminals 19, in accordance with the industrial robot described above. Figure 10b shows a cable harness provided with the body 14 according to the invention, divided into two sub-bodies 40c and 41c, which have been given a compatible design. The connection terminals 19 are arranged axially as well as radially in relation to the longitudinal axis of the cable harness. A holder device 42 is adapted to retain the sub-bodies while installing the cable harness in a manipulator and to be removed prior to connection of the sub-bodies 40c and 41 to a turning disc. Figure 10c shows a cable harness provided with lines/cables 43, radially extending from the centre line (B) of the cable harness and twisted around the centre line (B) of the cable harness.

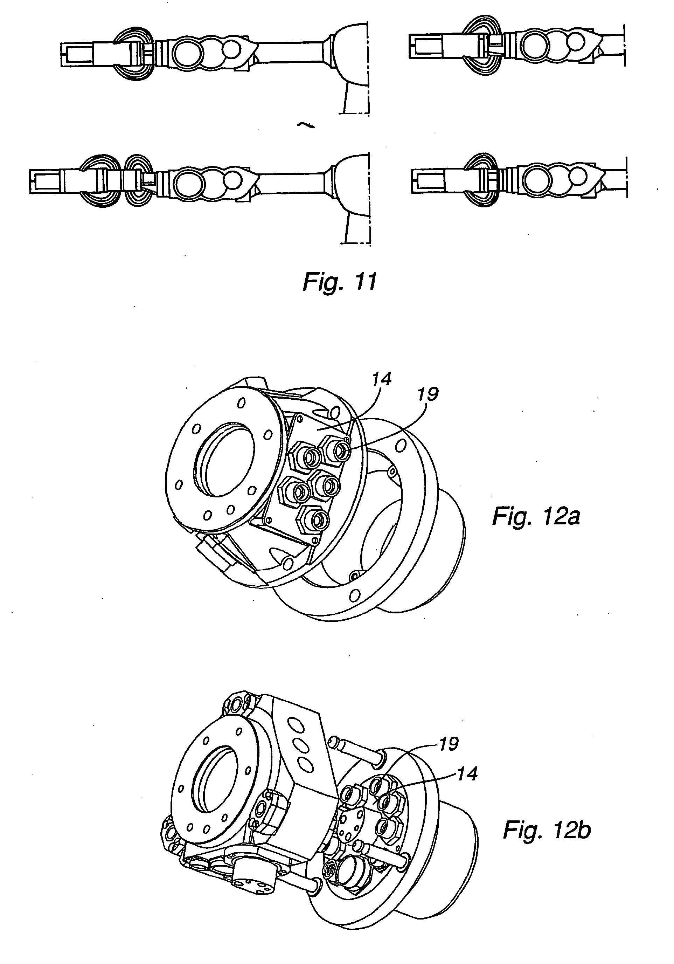

Figure 11 shows an interface ahead of the turning disc at the sixth axis in a six-axis industrial robot. This results in an attachment flange for various types of interfaces, for example a built-in tool changer for transmitting process media (manually or automatically) or the customer's own interfaces. This eliminates the need of an additional cable harness and renders the offset equal up to a robot tool irrespective of which arrangement has been chosen. Further, an external cable harness between standard interface and tool changer is eliminated. The transfer of the media between the application and the robot takes place internally. The same interface is obtained for all types of applications. Changing applications and providing the robot with different interfaces to the customer will be easy. The interface between the robot part and the customer part will be clearly defined.

Figures 12a and 12b show alternative embodiments of an interface according to the invention ahead of the turning disc as viewed from the robot foot, where the cable harness is not shown for the sake of clarity.

## Claims

1. An industrial robot comprising a manipulator with a control system where the manipulator comprises a hollow robot wrist (9), a turning disc (10) rotatable about an axis (A) where the robot wrist (9) and the turning disc (10) are adapted for rotation and/or bending relative to each other and where the turning disc supports a robot tool (11), wherein a cable harness (12; 37) is drawn by a first end 13; 32; 38) through the robot wrist (9) and up to the turning disc, and arranged coaxially and detachably connectable, **characterised in that** the cable harness is connected by said first end to the turning disc (10) via a connection device, and wherein the connection device comprises a body (14), secured to the first end (13) of the cable harness in at least one line/strand, and the body (14) is provided with terminals (19) for connection of power supply to the robot tool (11).

2. An industrial robot according to claim 1, wherein the body (14) is detachably built into the turning disc (10).

3. An industrial robot system according to any of the preceding claims, wherein the body (14) is divided into at least two sub-bodies (17, 18, 20, 21, 22, 40, 41).

4. An industrial robot according to claim 3, wherein at least one sub-body (20, 21, 22, 23) is detachably built into the turning disc (10).

5. An industrial robot according to claim 3, wherein the body (14) is axially divided into a first part (17) and a second part (18), which first (17) and second (18) parts are coaxially arranged and detachably interconnected in series.

6. An industrial robot according to claim 3, wherein the body (14) is radially divided into at least two sub-bodies (20, 21, 22, 23).

7. An industrial robot according to claim 6, wherein the sub-bodies (20, 21, 22, 23) are arranged with a compatible design.

8. An industrial robot according to any of the preceding claims, wherein the cable harness (12) included in the robot is divided into at least one first (29) and one second part length (30), said part lengths being detachably interconnected through a coupling device (31).

9. An industrial robot according to claim 8, wherein the first part length (29) is, on the one hand, arranged with the body (14) secured to the first end (32) of the part length (29) for detachable connection to the turning disc (10), and, on the other hand, at the second end (33) of the part length adapted for detachable connection to the first end (34) of the second length section (30).

10. An industrial robot according to any of the preceding claims 8-9, wherein the first part length (29) of the cable harness (12) is provided with lines/cables (35) radially extending from the centre line (B) of the cable harness and twisted around the centre line (B).

11. An industrial robot according to claim 10, wherein the lines/cables (35) included in the first part length (29) are arranged twisted at least one turn around the centre line (B) along the length section (36) of the part length (29).

## Patentansprüche

1. Ein industrieller Roboter umfassend einen Manipulator mit einem Steuerungssystem, wobei der Manipulator ein hohles Robotergelenk (9) und eine um eine Achse (A) drehbare Drehscheibe (10) umfasst, wobei das Robotergelenk (9) und die Drehscheibe (10) eingerichtet sind für Rotation und/oder Biegen relativ zueinander, und wobei die Drehscheibe ein Roboterwerkzeug (11) trägt, wobei ein Kabelstrang (12; 37) bei einem ersten Ende (13; 32; 38) durch das Robotergelenk (9) und bis zu der Drehscheibe gezogen ist und koaxial und lösbar verbindbar angeordnet ist, **dadurch gekennzeichnet, dass** der Kabelstrang bei dem ersten Ende mit der Drehscheibe (10) durch eine Verbindungsvorrichtung verbunden ist, und wobei die Verbindungsvorrichtung einen Körper (14) umfasst, der an dem ersten Ende (13) des Kabelstrangs an mindestens einer Leitung/einem Einzeldraht befestigt ist, und der Körper (14) mit Terminals (19) bereitgestellt ist für eine Stromversorgungsverbindung zu dem Roboterwerkzeug (11).

2. Ein industrieller Roboter nach Anspruch 1, wobei der Körper (14) entfernbar in die Drehscheibe (10) eingebaut ist.

3. Ein industrielles Robotersystem nach einem der vorhergehenden Ansprüche, wobei der Körper (14) in mindestens zwei Unterkörper (17, 18, 20, 21, 22, 40, 41) unterteilt ist.

4. Ein industrieller Roboter nach Anspruch 3, wobei mindestens ein Unterkörper (20, 21, 22, 23) entfernbar in die Drehscheibe (10) eingebaut ist.

5. Ein industrieller Roboter nach Anspruch 3, wobei der Körper (14) axial in einen ersten Teil (17) und einen zweiten Teil (18) unterteilt ist, wobei der erste (17) und zweite (18) Teil koaxial angeordnet und lösbar in Reihe verbunden sind.

6. Ein industrieller Roboter gemäß Anspruch 3, wobei der Körper (14) radial in mindestens zwei Unterkörper (20, 21, 22, 23) unterteilt ist.

7. Ein industrieller Roboter nach Anspruch 6, wobei die Unterkörper (20, 21, 22, 23) mit einem kompatiblen Design angeordnet sind.

8. Ein industrieller Roboter nach einem der vorhergehenden Ansprüche, wobei der in dem Roboter enthaltene Kabelstrang (12) mindestens in eine erste (29) und eine zweite Teillänge (30) unterteilt ist, wobei die Teillängen durch eine Verbindungsvorrichtung (31) lösbar verbunden sind.

9. Ein industrieller Roboter nach Anspruch 8, wobei die erste Teillänge (29) einerseits angeordnet ist, so dass der Körper (14) an dem ersten Ende (32) der Teillänge (29) befestigt ist für eine lösbare Verbindung zu der Drehscheibe (10), und andererseits bei dem zweiten Ende (33) der Teillänge eingerichtet ist für eine lösbare Verbindung zu dem ersten Ende (34) des zweiten Längenabschnitts (30).

10. Ein industrieller Roboter nach einem der vorhergehenden Ansprüche 8-9, wobei die erste Teillänge (29) des Kabelstrangs (12) mit Leitungen/Kabeln (35) bereitgestellt ist, die sich radial von der Zentrumsleitung (B) des Kabelstrangs erstrecken und um die Zentrumslinie (B) gewunden sind.

11. Ein industrieller Roboter nach Anspruch 10, wobei die in der ersten Teillänge (29) enthaltenen Leitungen/Kabel (35) mindestens eine Drehung um die Zentrumslinie (B) entlang des Längenabschnitts (36) der Teillänge (29) gewunden sind.

## Revendications

1. Robot industriel comprenant un manipulateur muni d'un système de commande, le manipulateur comprenant un poignet de robot creux (9), un disque tournant (10) pouvant tourner autour d'un axe (A), le poignet de robot (9) et le disque tournant (10) étant adaptés pour tourner et/ou se courber l'un par rapport à l'autre et le disque tournant supportant un outil de robot (11), dans lequel un harnais à câbles (12 ; 37) est tiré par une première extrémité (3 ; 32 ; 38) à travers le poignet de robot (9) et en montant jusqu'au disque tournant, et adapté pour pouvoir être connecté de manière coaxiale et détachable, **caractérisé en ce que** le harnais de câbles est connecté par ladite première extrémité au disque tournant (10) via un dispositif de connexion, et dans lequel le dispositif de connexion comprend un corps (14), fixé à la première extrémité (13) du harnais à câbles dans au moins une ligne/brin, et le corps (14) est pourvu de bornes (19) pour la connexion de l'outil de robot (11) à une alimentation électrique.

2. Robot industriel selon la revendication 1, dans lequel le corps (14) est construit de manière détachable dans le disque tournant (10).

3. Système de robot industriel selon l'une quelconque des revendications précédentes, dans lequel le corps (14) est divisé en au moins deux sous-corps (17, 18, 20, 21, 22, 40, 41).

4. Robot industriel selon la revendication 3, dans lequel au moins un sous-corps (20, 21, 22, 23) est construit de manière détachable dans le disque tournant (10).

5. Robot industriel selon la revendication 3, dans lequel le corps (14) est divisé axialement en une première partie (17) et une deuxième partie (18), lesdites première (17) et deuxième (18) parties étant disposées de manière coaxiale et interconnectées de manière détachable en série.

6. Robot industriel selon la revendication 3, dans lequel le corps (14) est divisé radialement en au moins deux sous-corps (20, 21, 22, 23).

7. Robot industriel selon la revendication 6, dans lequel les sous-corps (20, 21, 22, 23) sont agencés avec un dessin compatible.

8. Système de robot industriel selon l'une quelconque des revendications précédentes, dans lequel le harnais à câbles (12) inclus dans le robot est divisé en au moins une première (29) et une deuxième (30) longueurs partielles, lesdites longueurs partielles étant interconnectées de manière détachable par l'intermédiaire d'un dispositif d'accouplement (31).

9. Robot industriel selon la revendication 8, dans lequel la première longueur partielle (29) est, d'une part, disposée avec le corps (14) fixé à la première extrémité (32) de la longueur partielle (29) pour une connexion détachable au disque tournant (10) et, d'autre part, à la deuxième extrémité (33) de la longueur partielle adaptée pour une connexion détachable à la première extrémité (34) de la deuxième section de longueur (30).

10. Système de robot industriel selon l'une quelconque des revendications 8 et 9, dans lequel la première longueur partielle (29) du harnais à câbles (12) est pourvue de lignes/câbles (35) s'étendant radialement depuis l'axe central (B) du harnais à câbles et torsadé(e)s autour de l'axe central (B).

11. Robot industriel selon la revendication 10, dans lequel les lignes/câbles (35) compris(e)s dans la première longueur partielle (29) sont torsadés au moins d'un tour autour de l'axe central (B) le long de la section de longueur (36) de la longueur partielle (29).
